# EUROPÄISCHE PATENTSCHRIFT

(11) **EP 0 753 520 B1**
(45) Veröffentlichungstag und Bekanntmachung des Hinweises auf die Patenterteilung: **17.10.2001**
(21) Anmeldenummer: 95110841.4
(22) Anmeldetag: 11.07.1995
(51) Int. Cl.: C07F 1/02

(54) **Gelöstes Methyllithium enthaltendes Synthesemittel**
Synthesis agent containing dissolved methyllithium
Agent de synthèse contenant du méthyllithium dissous

(43) Veröffentlichungstag der Anmeldung: 15.01.1997
(73) Patentinhaber: Chemetall GmbH, 60487 Frankfurt (DE)
(72) Erfinder: Weiss, Wilfried, Dr., D-61440 Oberursel (DE); Rittmeyer, Peter, Dr., D-65843 Sulzbach (DE); Emmel, Ute, D-65929 Frankfurt am Main (DE)
(74) Vertreter: Uppena, Franz, Dr.

(56) Entgegenhaltungen:
- EP-A- 0 597 520
- DE-A- 4 424 222
- LIEBIGS ANNALEN DER CHEMIE, Bd. 704, 1967, Seiten 120-125, XP002005816 SCHÖLLKOPF, U. ET AL.: "METHOXYMETHYL-LITHIUM AUS CHLOROMETHYL-METHYLETHER UND LITHIUM IN METHYLAL"

## Beschreibung

Die Erfindung betrifft neue, gelöstes Methyllithium enthaltende Synthesemittel sowie Verfahren zu deren Herstellung.

Methyllithium wird benutzt als Reagens bei der Herstellung pharmazeutischer Erzeugnisse, wie Vitaminderivate oder Steroidderivate, und bei speziellen Synthesestufen, wie Reaktionen vom Carbentyp zur Herstellung von Allenen und Alkoxycyclopropanen, Methylierungsreaktionen zur Herstellung von Alkenyllithium- und steroidalen Alkenylverbindungen, Reduktionsreaktionen verschiedener Übergangsmetallhalogenide, wie PdCl₂ zu Pd(0), der Herstellung von Methyllithium-Cupraten für 1,4-konjugierte Additionen oder zur Herstellung von anderen metallorganischen Verbindungen, wie Me₂Mg, MeTi(NEt₂)₃, Me₃Al, Me₃As oder Me₃Ga.

Methyllithium ist kommerziell erhältlich als ca. 5 %ige Lösung in Diethylether oder als ca. 6 %ige Lösung in Diethylether, welche ca. 10 % Lithiumbromid als komplexbildenden Stabilisator enthält. Diese Handelsformen von Methyllithium sind durch die Gegenwart von Diethylether nur von eingeschränkter Nutzbarkeit bedingt durch den niedrigen Flammpunkt von Diethylether. Andere etherische Lösungen von Methyllithium haben keine kommerzielle Bedeutung, da zum einen die Konzentration an Methyllithium in ihnen sehr gering (ca. 3 Gew.-%) und zum anderen die Stabilität ungenügend ist (z.B. in THF oder Glycolethern). In Kohlenwasserstoffen und Aromaten hingegen ist Methyllithium unlöslich. Eine gewisse Löslichkeit in Aromaten wird erreicht, wenn man den Methyllithium-THF-Komplex einsetzt (max. 3,74 Gew.-%). So sind aus den Dokumenten EP-A-0 285 374 und US-A-5,171,467 Alkyllithium-Verbindungen in aromatischen Kohlenwasserstoffen bekannt, die durch einen Gehalt an einer Lewis-Base, wie Tetrahydrofuran, und Lithiumhalogeniden stabilisiert sind. Da diese Lösungen aber zum Zerfall durch Metallierung des aromatischen Kohlenwasserstoffs neigen, werden Dialkylmagnesium-Verbindungen zugesetzt. Der Gehalt an aktiven Lithium-Verbindungen sinkt dadurch auf 2,6 Gew.-% und die Reaktivität wird durch die Anwesenheit von Dialkylmagnesium-Verbindungen beeinflußt.

Aufgabe der Erfindung ist es, ein gelöstes Methyllithium enthaltendes Synthesemittel anzugeben, das eine gute Lagerstabilität und einen höheren Gehalt an Methyllithium in der Lösung aufweist.

Erfindungsgemäß wird die Aufgabe durch ein Synthesemittel gelöst, bei dem das Methyllithium in einem Lösemittel der allgemeinen Formel I 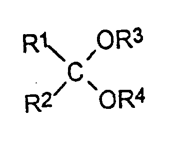 vorliegt, wobei R¹ und R² unabhängig voneinander ein Wasserstoff-, Methyl- oder Ethylrest und R³ sowie R⁴ ein Methyl- oder Ethylrest sind. Überraschenderweise wurde gefunden, daß eine Lösung von Methyllithium in einem der allgemeinen Formel I entsprechenden Lösemittel bei Lagertemperaturen bis zur Raumtemperatur im Zeitraum bis zu 100 Tagen keine signifikanten Veränderungen im Hinblick auf den Gehalt an Aktivbase zeigt, und auch bei Lagerung oberhalb dieser Temperatur nur ein allmählicher Zerfall, allerdings in deutlicher Abhängigkeit von der Umgebungstemperatur, einsetzt.

Für spezielle stereospezifische Synthesen wird ein Synthesemittel bereitgestellt, das weiterhin Lithiumbromid oder Lithiumjodid enthält. Vorzugsweise wird für das Synthesemittel Diethoxymethan als Lösemittel für das Methyllithium eingesetzt. Eine weitere Ausführung der Erfindung besteht darin, daß in der Lösung ein Methyllithium-Diethoxymethan-Komplex vorliegt, in dem Methyllithium und Diethoxymethan im Molverhältnis 1 : 0,5 bis 1 : 2,0 enthalten ist. Ein erfindungsgemäßes methyllithiumhaltiges Synthesemittel ist weiterhin ein Methyllithium-Diethoxymethan-Komplex, der in einem Lösemittel gemäß der allgemeinen Formel I oder einem Kohlenwasserstoff, vorzugsweise einem aromatischen Kohlenwasserstoff, wie Toluen, gelöst ist.

Erfindungsgemäß wird das gelöstes Methyllithium enthaltende Synthesemittel dadurch hergestellt, daß
a) Lithium-Pulver oder Lithium-Granulat in einem der allgemeinen Formel I entsprechenden Lösemittel dispergiert und Methylhalogenid zudosiert,
b) die Reaktionstemperatur im Bereich von 0 bis 60°C gehalten und
c) das entstandene Lithiumhalogenid von der Methyllithium-Lösung abgetrennt
wird.

Vorzugsweise wird zur Dispersion von Lithium-Pulver in Diethoxymethan die stöchiometrische Menge Methylhalogenid im Zeitraum von 2 bis 6 Stunden zudosiert, wobei die Reaktionstemperatur im Bereich von 15 bis 50°C gehalten wird.

Ein spezielles, für stereochemische Reaktionen geeignetes Synthesemittel wird erhalten, wenn weiterhin bis zu 10 Gew.-% Lithiumbromid oder Lithiumjodid zugesetzt werden.

Nach dem erfindungsgemäßen Verfahren sind Synthesemittel zugänglich, die einen 5 bis 10 %igen Methyllithium-Gehalt in der Lösung aufweisen. Die hohe Stabilität der erfindungsgemäßen Methyllithium-Lösung und die vergleichsweise hohe Konzentration gestatten einen günstigen Einsatz dieser Lösungen in den bekannten Syntheseverfahren.

Die nachfolgenden Beispiele sollen den Erfindungsgegenstand weiter erläutern.

### Beispiel 1

22,2 g (3200 mmol) Lithium-Pulver werden in 350 g Diethoxymethan (DEM) im Doppelmantelreaktor bei einer Innentemperatur T(i) = 35°C vorgelegt und innerhalb von 5 Stunden werden 80,0 g (1585 mmol) Methylchlorid eingeleitet. Die Reaktionswärme wird dabei über den Mantel abgeführt. Nach einer Nachreaktionszeit von 30 Minuten und Trennung von der Reaktionssuspension wird ein farbloses Filtrat mit einem Methyllithium-Gehalt von 3,69 mmol/g erhalten.

### Beispiel 2

Beispiel 1 wird wiederholt mit dem Unterschied, daß anstelle von Lithium-Pulver Lithium-Granulat in DEM vorgelegt und das Methylchlorid bei einer Innentemperatur T(i) = 25°C innerhalb von 315 Minuten eingeleitet wird.

Nach einer Nachreaktionszeit von 30 Minuten wird über eine G4-Fritte filtriert. Es werden 368 g klare, farblose Lösung mit einem Methyllithium-Gehalt von 3,86 mmol/g erhalten.

### Vergleichsbeispiel 1

Beispiel 2 wird wiederholt mit dem Unterschied, daß die Reaktion in 352 g Diethylether durchgeführt wird und 83,8 g (1660 mmol) Methylchlorid innerhalb von 395 Minuten zugesetzt werden. Nach 30 Minuten Nachreaktionszeit und Abfiltration werden 341 g klare, farblose Methyllithium-Lösung in Diethylether mit einem Methyllithium-Gehalt von 4,113 mmol/g erhalten.

### Beispiel 3

In einem Reaktionsgefäß werden 306,5 g einer Methyllithium-DEM-Lösung mit einem Gesamtbasen-Gehalt von 3,55 mmol/g bei 25°C vorgelegt. 30 g (345 mmol) Lithiumbromid werden in 5-Gramm-Portionen zudosiert. Man erhält eine trübe Suspension. Die Suspension wird filtriert und 329 g klares, farbloses Filtrat mit einem Gesamtbasen-Gehalt von 3,24 mmol/g erhalten. In der Lösung wird ein Gehalt von 7,2 % Methyllithium, 8,25 % Lithiumbromid und 0,98 % Lithiumchlorid gefunden. Die erhaltene Lösung wird 19 Tage bei Raumtemperatur gelagert. Anschließend wird ein Gesamtbasen-Gehalt von 3,20 mmol/g und ein Aktivbasen-Gehalt von 3,00 mmol/g ermittelt. Die mittlere Zersetzungsrate liegt damit bei ca. 0,05 % Methyllithium je Tag bei 20°C.

### Beispiel 4

170 g einer Lösung von 550 mmol Methyllithium in Diethoxymethan werden mit 200 g Toluol verdünnt. Im Vakuum bei Raumtemperatur entfernt man aus dieser Lösung überschüssiges Diethoxymethan, bis sich durch das Einstellen eines konstanten Druckes die Anwesenheit eines Methyllithium-DEM-Komplexes zu erkennen gibt.

| | | | |
|---|---|---|---|
| p ~ 15 mbar | DEM | Methyllithium ~ 2,0 | 1 |
| p ~ 10 mbar | DEM | Methyllithium ~ 1,5 | 1 |
| p ~ 5 mbar | DEM | Methyllithium ~ 1,0 | 1 |
| p ~ Ölpumpenvakuum | DEM | Methyllithium ~ 0,5 | 1 |

Die trübe toluolische Methyllithium-Diethoxymethan-Lösung wird jeweils filtriert und die Löslichkeit bestimmt.

| | | |
|---|---|---|
| Methyllithium | DEM ~ 1 | 2,0 = 1,54 % |
| | 1 | 1,5 = 1,45 % |
| | 1 | 1,0 = 1,00 % |
| | 1 | 0,8 = 0,25 % |

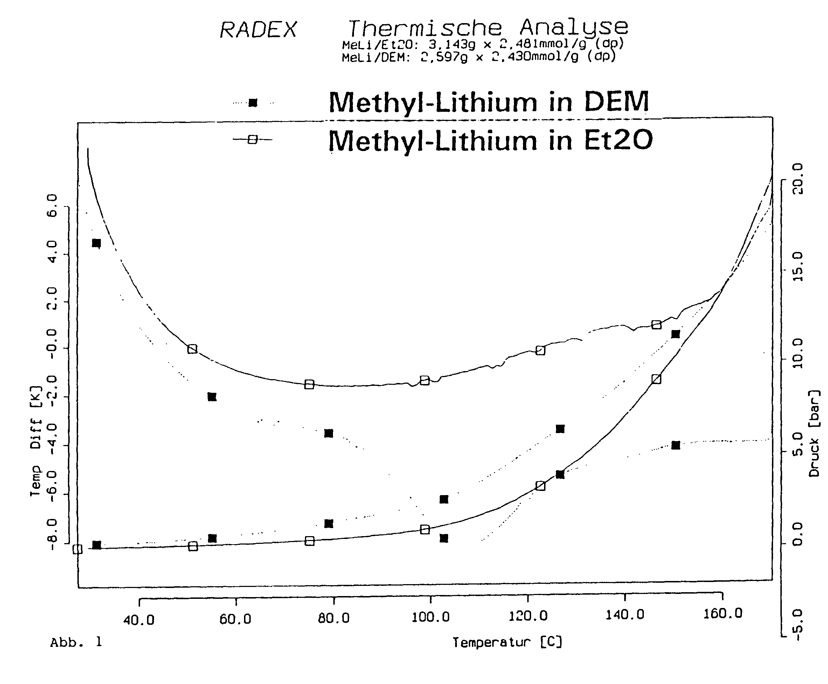

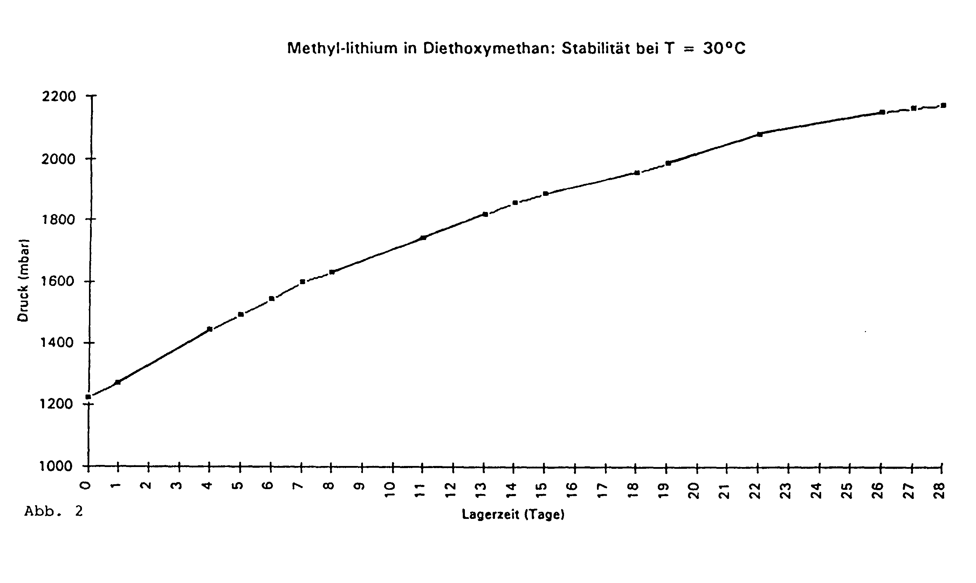

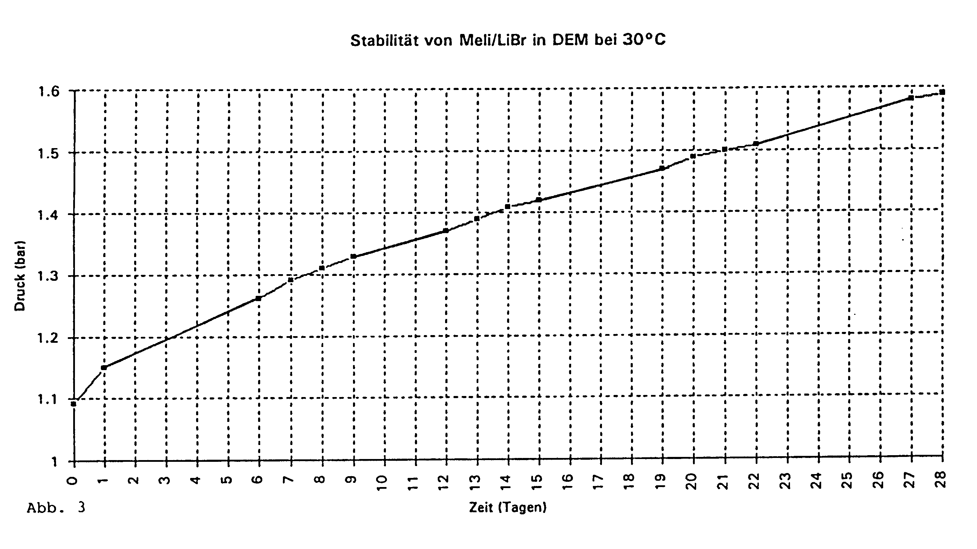

Die Abbildung 1 zeigt den durch Thermogravimetrie ermittelten Vergleich der dynamischen Stabilitätskurven einer Lösung von Methyllithium in Diethylether mit einer Lösung von Methyllithium in Diethoxymethan. Die Abbildungen 2 und 3 zeigen die Lagerungsstabilität von Methyllithium in DEM und einer Methyllithium/Lithiumbromid/DEM-Lösung bei 30°C.

## Patentansprüche

1. Gelöstes Methyllithium enthaltendes Synthesemittel, **dadurch gekennzeichnet, daß** das Methyllithium in einem Lösemittel der allgemeinen Formel I 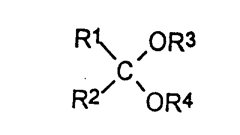 vorliegt, wobei R¹ und R² unabhängig voneinander ein Wasserstoff-, Methyl- oder Ethylrest und R³ sowie R⁴ ein Methyl- oder Ethylrest sind.

2. Synthesemittel nach Anspruch 1, **dadurch gekennzeichnet, daß** es weiterhin Lithiumbromid oder Lithiumjodid enthält.

3. Synthesemittel nach Anspruch 1 und/oder Anspruch 2, **dadurch gekennzeichnet, daß** das Lösemittel Diethoxymethan ist.

4. Synthesemittel nach Anspruch 1 und/oder Anspruch 2, **dadurch gekennzeichnet, daß** in der Lösung ein Methyllithium-Diethoxymethan-Komplex vorliegt, in dem Methyllithium und Diethoxymethan im Molverhältnis 1 : 0,5 bis 1 : 2,0 enthalten ist.

5. Synthesemittel nach Anspruch 4, **dadurch gekennzeichnet, daß** ein Methyllithium-Diethoxymethan-Komplex in einem Lösemittel gemäß der allgemeinen Formel I oder in einem Kohlenwasserstoff, vorzugsweise einem aromatischen Kohlenwasserstoff, gelöst ist.

6. Verfahren zur Herstellung eines gelöstes Methyllithium enthaltenden Synthesemittels gemäß Anspruch 1, **dadurch gekennzeichnet, daß**
a) Lithium-Pulver oder Lithium-Granulat in einem Lösemittel entsprechend der allgemeinen Formel I dispergiert und Methylhalogenid zudosiert,
b) die Reaktionstemperatur im Bereich von 0 bis 60°C gehalten und
c) das entstandene Lithiumhalogenid von der Methyllithium-Lösung abgetrennt
wird.

7. Verfahren nach Anspruch 6, **dadurch gekennzeichnet, daß** zur Dispersion von Lithium-Pulver oder Lithium-Granulat die stöchiometrische Menge an Methylhalogenid im Zeitraum von 2 bis 6 Stunden zudosiert wird, wobei die Reaktionstemperatur im Bereich von 15 bis 50°C gehalten wird.

8. Verfahren nach Anspruch 6, **dadurch gekennzeichnet, daß** weiterhin bis zu 10 % Lithiumbromid oder Lithiumjodid zugesetzt werden.

## Claims

1. Synthesis medium containing dissolved methyl lithium, **characterized in that** the methyl lithium is present in a solvent of the general formula I 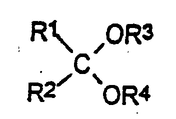 where R¹ and R², independently of each other, are a hydrogen radical, methyl radical or ethyl radical, and R³ and also R⁴ are a methyl radical or ethyl radical.

2. Synthesis medium according to claim 1, **characterized in that** it further contains lithium bromide or lithium iodide.

3. Synthesis medium according to claim 1 and/or claim 2, **characterized in that** the solvent is diethoxymethane.

4. Synthesis medium according to claim 1 and/or claim 2, **characterized in that** a methyl lithium-diethoxymethane complex, in which methyl lithium and diethoxymethane is contained in a molar ratio of 1 : 0.5 to 1 : 2.0, is present in the solution.

5. Synthesis medium according to claim 4, **characterized in that** a methyl lithium-diethoxymethane complex is dissolved in a solvent according to the general formula I or in a hydrocarbon, preferably an aromatic hydrocarbon.

6. Method for the preparation of a synthesis medium according to claim 1 that contains dissolved methyl lithium, **characterized in that**
a) lithium powder or granulated lithium is dispersed in a solvent in accordance with the general formula I and methyl halide is added in metered doses;
b) the reaction temperature is kept in the range of 0 to 60°C; and
c) the lithium halide that is formed is separated from the methyl-lithium solution.

7. Method according to claim 6, **characterized in that**, for the purpose of dispersing lithium powder or granulated lithium, the stoichiometric quantity of methyl halide is added in metered doses over a period of 2 to 6 hours, with the reaction temperature being kept in the range of 15 to 50°C.

8. Method according to claim 6, **characterized in that**, furthermore, up to 10 % lithium bromide or lithium iodide is added.

## Revendications

1. Agent de synthèse contenant du méthyllithium dissous, **caractérisé en ce que** le méthyllithium est dans un solvant de formule générale I : 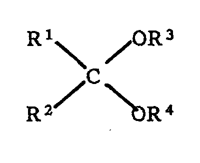 dans laquelle R¹ et R² représentent chacun indépendamment un atome d'hydrogène ou un groupe méthyle ou éthyle et R³ et R⁴ représentent chacun un groupe méthyle ou éthyle.

2. Agent de synthèse selon la revendication 1, **caractérisé en ce qu'**il contient en outre du bromure de lithium ou de l'iodure de lithium.

3. Agent de synthèse selon la revendication 1 ou 2, **caractérisé en ce que** le solvant est le diéthoxyméthane.

4. Agent de synthèse selon la revendication 1 ou 2, **caractérisé en ce qu'**est présent dans la solution un complexe méthyllithium-diéthoxyméthane où le méthyllithium et le diéthoxyméthane figurent suivant un rapport molaire de 1:0,5 à 1:2,0.

5. Agent de synthèse selon la revendication 4, **caractérisé en ce qu'**un complexe méthyllithium-diéthoxyméthane est dissous dans un solvant de formule générale I ou dans un hydrocarbure, de préférence un hydrocarbure aromatique.

6. Procédé de préparation d'un agent de synthèse contenant du méthyllithium dissous selon la revendication 1, **caractérisé en ce que** :
a) on disperse de la poudre de lithium ou du granulé de lithium dans un solvant de formule générale I et on ajoute une quantité dosée d'halogénure de méthyle,
b) on maintient la température de réaction dans le domaine allant de 0 à 60 °C et
c) on sépare l'halogénure de lithium formé de la solution de méthyllithium.

7. Procédé selon la revendication 6, **caractérisé en ce que** l'on ajoute à la dispersion de poudre de lithium ou de granulé de lithium la quantité stoechiométrique d'halogénure de méthyle, en un laps de temps de 2 à 6 heures, en maintenant la température de réaction dans le domaine allant de 15 à 50 °C.

8. Procédé selon la revendication 6, **caractérisé en ce que** l'on ajoute en outre jusqu'à 10 % de bromure de lithium ou d'iodure de lithium.
